# EUROPEAN PATENT APPLICATION

(11) **EP 2 472 013 A1**
(43) Date of publication of application: **04.07.2012**
(21) Application number: 10197152.1
(22) Date of filing: 28.12.2010
(51) Int. Cl.: E03C 1/06, F16B 47/00

(54) **Holding device for hand-held shower head**

(71) Applicant: LDR Industries Inc., Chicago IL 60624 (US)
(72) Inventor: Greenspon, Lawrence, Chicago, IL 60624 (US)
(74) Representative: Graf Glück Habersack Kritzenberger

(57) **Abstract**

A holding device for a hand held shower head includes a holding bracket 2, an inner disc 3 and a suction disc 41. The suction disc 41 is directly attached to a predetermined position. The suction disc's bolt 42 inserts through a through hole of the inner disc 3 to connect with a threaded post of the holding bracket 2. The suction disc 41 and the wall are bored with two holes corresponding in position to the holes of the inner disc 3. Screws 33 are inserted through the holes and the suction disc 41 to secure the inner disc 3 and the suction disc 41 to the wall. The holding bracket 2 is mounted onto the suction disc 41, with the threaded post engaging with the bolt 42. The holding bracket 2 has an accommodation lid to cover the inner disc 3 and the suction disc 41 to form an integral whole so as to beautify the appearance.

## Description

### BACKGROUND OF THE INVENTION

### 1. FIELD OF THE INVENTION

The present invention relates to a holding device for a hand-held shower head, and more particularly to one having an inner disc with its curved inner edge fitting into a suction disc, and a holding bracket to press the suction disc to a wall. Screws are inserted through holes of the inner disc and the suction disc to secure both pieces to the wall. The holding bracket is mounted on the suction disc to form an integral whole.

### 2. DESCRIPTION OF THE PRIOR ART

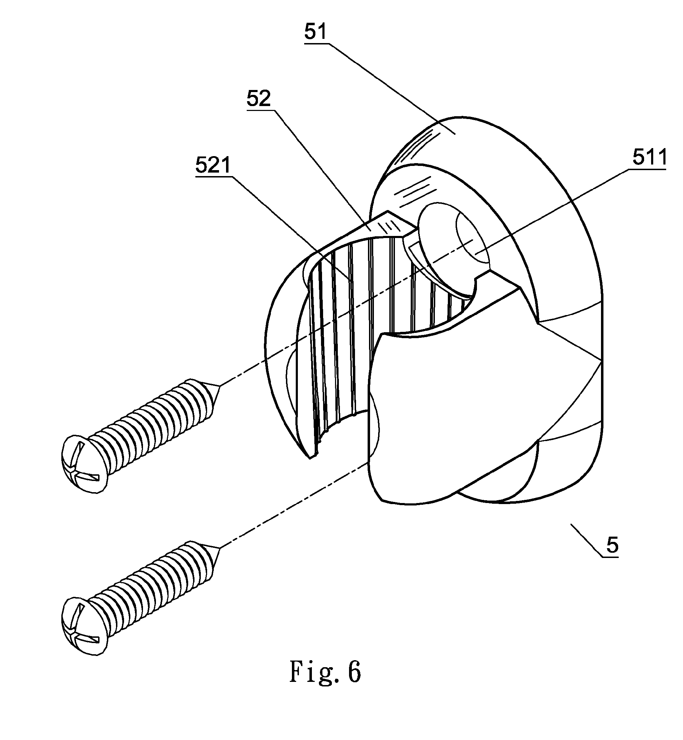

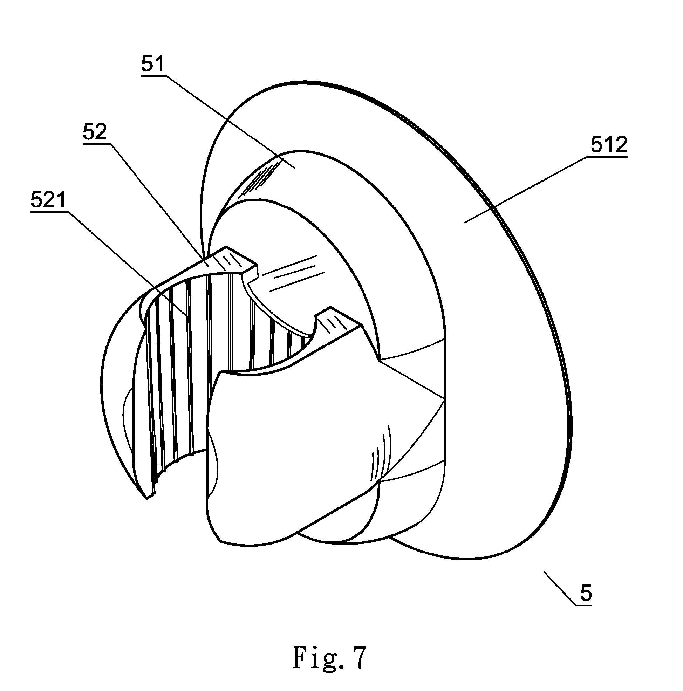

There are two types of holding devices on the market, fixed mounting and suction mounting. As shown in Fig. 6, a conventional fixed mounted holder device comprises a base 51, a pair of stems extending from two sides thereof, an insertion through 521 for collocating a hand-held shower head, and a plurality of locking holes for insertion of screws. The suction mounting device is substantially similar to the fixed mounting device with the exceptions described hereinafter. As shown in Fig. 7, the base 51 is provided with a suction plate to be attached to the wall. These two types are subject to the location. The former is limited to the wall and the heads of the screws are exposed, which are not pleasing to the eyes. The latter is only applied on a smooth surface, which presents a problem if a smooth surface is not available.

Accordingly, the inventor of the present invention has devoted himself, based on his many years of practical experiences, to the development of a new holding device for a hand-held shower head to overcome the aforesaid shortcomings.

### SUMMARY OF THE INVENTION

The object of the present invention is to provide a holding device for a hand-held shower head, which provides dual purposes.

Another aspect of the present invention is to provide a holding device for a hand-held shower head, which enhances option and convenience in use.

A further aspect of the present invention is to provide a holding device for a hand-held shower head, which beautifies the appearance of the holding device.

According to the present invention, provided is a holding device for a hand-held shower head, comprising:
a holding bracket comprising of an accommodation lid with a chamber therein, a threaded post disposed in the chamber, and a handle protruding from the accommodation lid, the handle having an insertion through thereon;
an inner disc having an curved inner edge, a central through hole, and a plurality of holes around the central through hole; and
a suction disc and a bolt at a central portion thereof;
thereby, the inner disc fitting into the suction disc with the curved inner edge engaging with a top edge of the suction disc, the holding bracket threads onto the suction disc bolt, pressing the suction disc to the wall, by inserting screws through the inner disc holes and the suction disc to secure the inner disc and the suction disc to the wall, the holding bracket being mounted on the suction disc to form an integral whole.

### BRIEF DESCRIPTION OF THE DRAWINGS

Fig. 1 is an exploded view of the present invention;
Fig. 2 is a perspective view of the present invention;
Fig. 3 is a cross-sectional view of a first preferred embodiment of the present invention;
Fig. 3-A is a perspective view of the first preferred embodiment of the present invention, partially sectioned;
Fig. 4 is a cross-sectional view of a second preferred embodiment of the present invention;
Fig. 4-A is a perspective view of the second preferred embodiment of the present invention, partially sectioned;
Fig. 5 is a perspective view of the present invention in conjunction with a hand-held shower head;
Fig. 6 (Prior Art) is a perspective view of a conventional fixed holder device; and
Fig. 7 (Prior Art) is a perspective view of a conventional attached holder device.

### DETAILED DESCRIPTION OF THE INVENTION

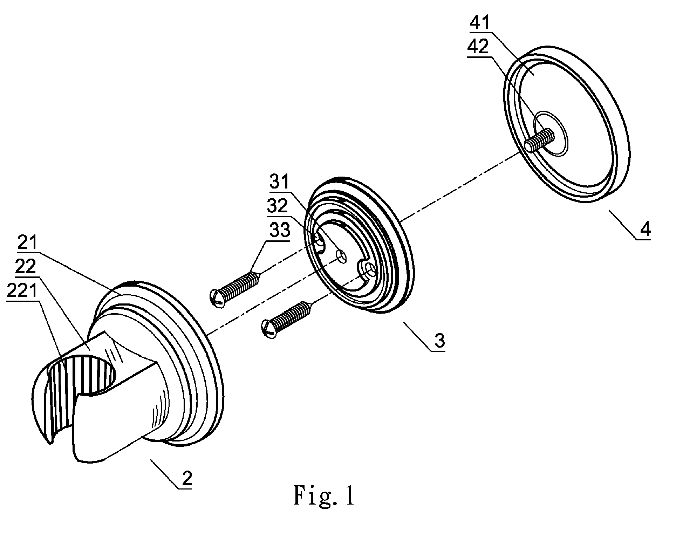

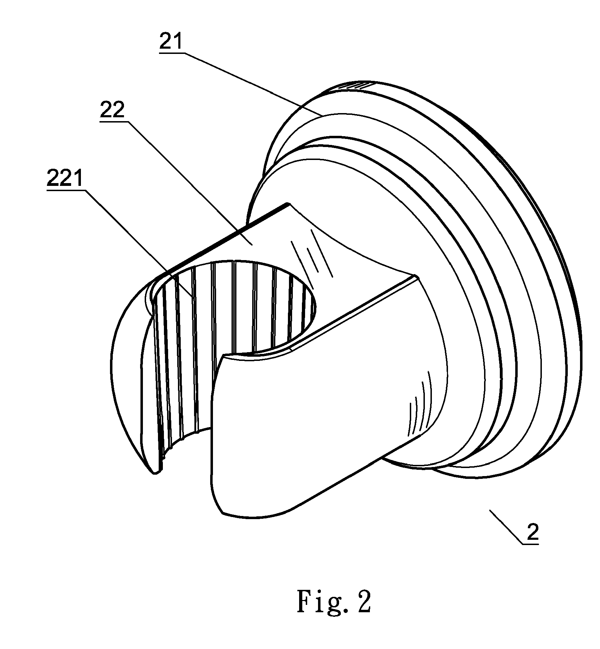

As shown in Figs. 1 and 2, the present invention comprises a holding bracket 2, an inner disc 3, and a suction disc assembly 4.

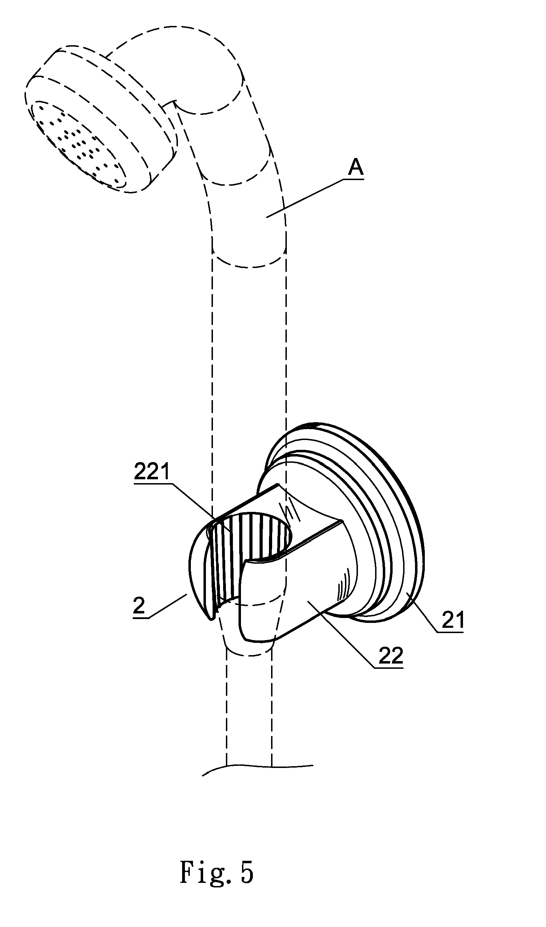

The holding bracket 2 comprises an accommodation lid 21, a holding handle 22 and a chamber therein. A threaded post 222 is provided in the chamber for connection of the inner disc 3 and the suction disc assembly 4. The holding handle 22 extends from the accommodation lid 21. An insertion through 221 is formed on the holding handle 22 for insertion of a hand held shower head A, as shown in Fig. 5.

The inner disc 3 fits into the suction disc assembly 4, with its curved inner edge engaging with the suction disc assembly 4. The inner disc 3 has a central through hole 31 and a plurality of holes 32 around a circumferential portion thereof. Screws 33 are inserted through the holes 32 to secure the inner disc 3 and the suction disc assembly 4 to a wall W.

The suction disc assembly 4 comprises a suction disc 41 and a bolt 42 on a central portion thereof. The bolt 42 is inserted through the through hole 31 of the inner disc 3 and connected to the threaded post 222 of the holding bracket 2.

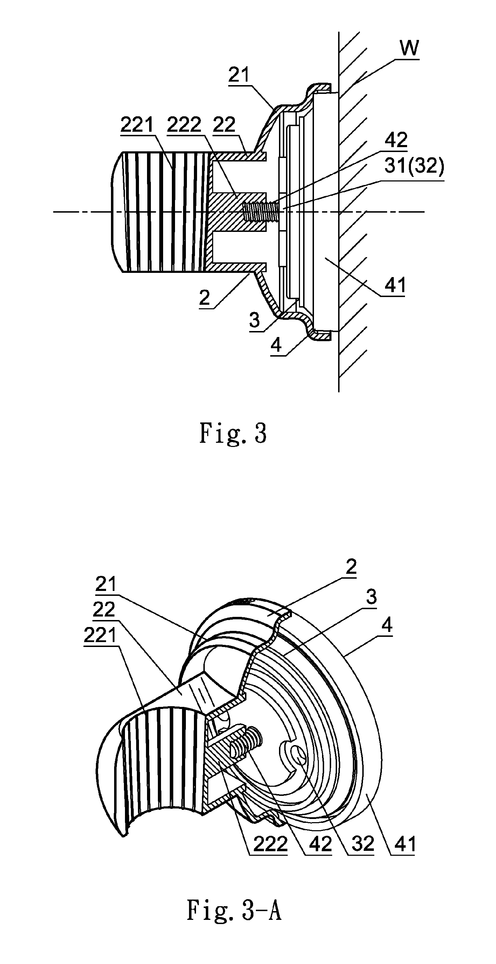

As shown in Figs. 3, 3-A and 5, the suction disc assembly 4 is directly attached to a predetermined position of a tile wall, a plain glass or a smooth appliance. The inner disc 3 fits into the suction disc assembly 4, with its curved inner edge engaging with a top edge of the suction disc 41. The bolt 42 is inserted through hole 31 and connected to the threaded post 222 of the holding bracket 2. The holding bracket 2, when threaded onto threaded post 222, presses the suction disc assembly 4 securely to stable smooth surface.

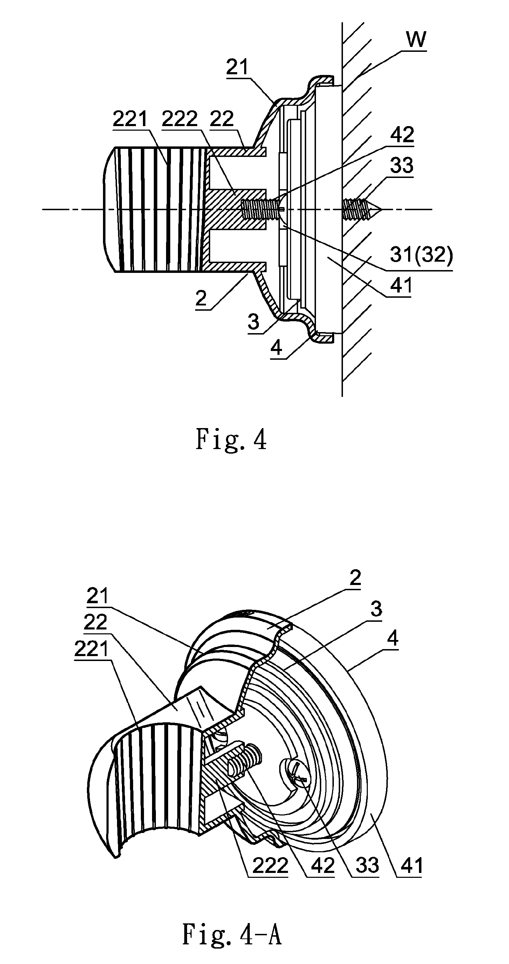

As shown in Figs. 4, 4-A and 5, the suction disc assembly 4 may slip off the wall after a period of time due to fatigued elasticity or because the wall W is not smooth enough. The present invention also solves this problem. The inner disc 3 fits into the suction disc assembly 4, and the bolt 42 passes through and protrudes outward from the through hole 31. The suction disc 41 and the wall W are bored with two holes corresponding in position to the threaded holes 32. Plastic anchors are inserted into the wall. The screws 33 are inserted through holes 32 into the holes of the suction disc 41 and the wall W to secure the inner disc 3 and the suction disc assembly 4 to the wall. Then, the holding bracket 2 is mounted on the suction disc assembly 4, with the threaded post 222 engaging with the bolt 42.

The accommodation lid 21 of the holding bracket 2 is to cover the inner disc 3 and the suction disc assembly 4 to form an integral whole. The present invention provides dual uses, facilitates option and convenience in use and beautifies the appearance of the present invention.

## Claims

1. A holder device for a shower head, comprising:
a holding bracket (2) comprised of an accommodation lid (21) with a chamber therein, a threaded post (222) disposed in the chamber, and a handle (22) protruding from the accommodation lid, the handle having an insertion through (221) thereon;
an inner disc (3) having an curved inner edge, a central through hole (31), and a plurality of holes (32) around the central through hole (31); and
a suction disc (41) and a bolt (42) at a central portion thereof;
thereby, the inner disc (3) fitting into the suction disc (41) with the curved inner edge engaging with a top edge of the suction disc (41), the holding bracket (2) is threaded onto the suction disc (41), pressing the suction disc (41) to the wall, by using screws (33) inserted through the inner disc holes and the suction disc (41) to secure both pieces to the wall, the holding bracket (2) is threaded onto the suction disc bolt (42) to form an integral whole.
